# EUROPEAN PATENT APPLICATION

(11) **EP 3 407 560 A1**
(43) Date of publication of application: **28.11.2018**
(21) Application number: 17202092.7
(22) Date of filing: 16.11.2017
(51) Int. Cl.: H04L 29/06, H04L 29/08, H04W 12/04, H04W 12/06

(54) **DATA BACKUP METHOD AND DEVICE, STORAGE MEDIUM AND SERVER**

(30) Priority: 27.05.2017 CN 201710392686
(71) Applicant: Guangdong OPPO Mobile Telecommunications Corp., Ltd., Guangdong 523860 (CN)
(72) Inventor: LIN, Lian, Dongguan, Guangdong 523860 (CN)
(74) Representative: Manitz Finsterwald Patentanwälte PartmbB

(57) **Abstract**

A data backup method and device, a storage medium and a server are provided. The data backup method is applied to a first server, and includes: a backup request containing first data to be backed up is acquired from a terminal, the backup request being configured to request the first server to back up the first data; a key acquisition request is sent to a second server according to the backup request, the key acquisition request containing characteristic information of the first data; a first encryption key is acquired from the second server, the first encryption key being generated according to the characteristic information of the first data; and the first data is encrypted to generate first encrypted data according to the first encryption key, and the first encrypted data is stored. The data backup method and device and server provided by the embodiments have a beneficial effect of improving security of data stored in the server.

## Description

### CROSS-REFERENCE TO RELATED APPLICATIONS

This application is filed based upon and claims priority to Chinese Patent Application No. 201710392686.7, entitled "Data Backup Method and Device, Storage Medium and Server", filed on May 27, 2017, the entire contents of which are incorporated herein by reference.

### TECHNICAL FIELD

The disclosure relates to the field of communications, and particularly to a data backup method and device, a storage medium and a server.

### BACKGROUND

In order to improve security of data in a mobile phone and relieve storage pressure of the mobile phone, the data in the mobile phone is usually backed up to a cloud for storage.

An existing backup manner usually directly uploads data of a mobile phone side to a third-party cloud server for backup and storage. However, after the data of the mobile phone side is backed up to the third-party cloud server, data leakage of the third-party cloud server may directly cause the data backed up by a user to be obtained by a criminal. Data leakage greatly jeopardizes privacy security and property security of the user.

Therefore, the existing data backup manner has a great risk of leakage, and needs to be improved urgently.

### SUMMARY

Embodiments of the disclosure provide a data backup method and device, a storage medium and a server, which have a beneficial effect of improving security of data stored in the server.

The embodiments of the disclosure provide a data backup method, which may be applied to a first server and include: a backup request containing first data to be backed up is acquired from a terminal, the backup request being configured to request the first server to back up the first data; a key acquisition request is sent to a second server according to the backup request, the key acquisition request containing characteristic information of the first data; a first encryption key is acquired from the second server, the first encryption key being generated according to the characteristic information of the first data; and the first data is encrypted to generate first encrypted data according to the first encryption key, and the first encrypted data is stored.

The embodiments of the disclosure provide a data backup device, which may be applied to a first server and include: a first acquisition module, configured to acquire a backup request containing first data to be backed up from a terminal, the backup request being configured to request the first server to back up the first data; a first sending module, configured to send a key acquisition request to a second server according to the backup request, the key acquisition request containing characteristic information of the first data; a second acquisition module, configured to acquire a first encryption key from the second server, the first encryption key being generated according to the characteristic information of the first data; and a first encryption module, configured to encrypt the first data to generate first encrypted data according to the first encryption key, and store the first encrypted data.

The embodiments of the disclosure provides a storage medium, which may store multiple instructions and may be applied to a server, the instructions being loaded by a processor and executing any abovementioned method.

The embodiments of the disclosure provide a server, which may include: a memory, a processor and a computer program stored on the memory and capable of running on the processor, the processor executing the computer program to implement any abovementioned method.

### BRIEF DESCRIPTION OF DRAWINGS

Other features, purposes and advantages of the disclosure will become more apparent by reading the detailed description made on nonrestrictive embodiments with reference to the following drawings.
Fig. 1 is a scenario diagram of a data backup method and device according to a preferred embodiment of the disclosure.
Fig. 2 is a flowchart of a data backup method according to a preferred embodiment of the disclosure.
Fig. 3 is a data interaction diagram of a data backup method according to a preferred embodiment of the disclosure.
Fig. 4 is another flowchart of a data backup method according to a preferred embodiment of the disclosure.
Fig. 5 is a first structure diagram of a data backup device according to a preferred embodiment of the disclosure.
Fig. 6 is a second structure diagram of a data backup device according to a preferred embodiment of the disclosure.
Fig. 7 is a third structure diagram of a data backup device according to a preferred embodiment of the disclosure.
Fig. 8 is a fourth structure diagram of a data backup device according to a preferred embodiment of the disclosure.
Fig. 9 is a flowchart of a data synchronization method according to a preferred embodiment of the disclosure.
Fig.10 is a structure diagram of a server according to a preferred embodiment of the disclosure.

### DETAILED DESCRIPTION

Referring to the drawings, the same component symbols represent the same components, and the principle of the disclosure is described with implementation in a proper operating environment as an example. The following descriptions are made on the basis of specific embodiments of the disclosure, and should not be considered as limits to other specific embodiments, which are not elaborated herein, of the disclosure.

In the following descriptions, the specific embodiments of the disclosure will be described with reference to operations and symbols of operations executed by one or more computers, unless otherwise noted. Therefore, it may be appreciated that these operations, which are mentioned for many times to be executed by the computer, are controlled by a computer processing unit including an electronic signal representative of data in a structured form. Such control converts the data or keeps the data at a position in a memory system of the computer, and may reconfigure or change the operation of the computer in a manner those skilled in the art knows. A maintained data structure of the data is a physical position of a memory, and has a specific characteristic defined by such a data format. However, the above descriptive text about the principle of the disclosure is not intended to form any limit, and those skilled in the art may realize that the following multiple operations may also be implemented in hardware.

The embodiments of the disclosure provide a data backup method and device, a storage medium and a server, capable of improving security of data stored in the server.

At least some embodiments of the present disclosure provide a data backup method, applied to a first server and comprising: acquiring a backup request containing first data to be backed up from a terminal, the backup request being configured to request the first server to back up the first data; sending a key acquisition request to a second server according to the backup request, the key acquisition request containing characteristic information of the first data; acquiring a first encryption key from the second server, the first encryption key being generated according to the characteristic information of the first data; and encrypting the first data to generate first encrypted data according to the first encryption key, and storing the first encrypted data.

According to at least some embodiments, sending the key acquisition request to the second server according to the backup request comprises: extracting user information and a data identifier of the first data from the backup request, and determining the user information and the data identifier as the characteristic information; and sending the key acquisition request containing the characteristic information to the second server.

According to at least some embodiments, wherein the backup request includes second decrypted data and the second encrypted data is generated by encrypting the first data with a second encryption key; and wherein after acquiring the backup request sent by the terminal, the method further comprises: decrypting the second encrypted data with a second decryption key to obtain the first data, the second decryption key being configured to decrypt the first data encrypted with the second encryption key.

According to at least some embodiments, wherein the backup request includes second encrypted data and third encrypted data, the second encrypted data being generated by encrypting the first data with the second encryption key, the third encrypted data being generated by encrypting a second decryption key with a third encryption key and the second decryption key being configured to decrypt the first data encrypted with the second encryption key; wherein after acquiring the backup request sent by the terminal, the method further comprises: decrypting the third encrypted data with a third decryption key to obtain the second decryption key, the third decryption key being configured to decrypt the second decryption key encrypted with the third encryption key; and decrypting the second encrypted data with the second decryption key to obtain the first data.

According to at least some embodiments, decrypting the third encrypted data to obtain the second decryption key with the third decryption key comprises: acquiring the third decryption key from the second server; and decrypting the third encrypted data with the third decryption key to obtain the second decryption key.

According to at least some embodiments, the method further comprises: deleting the first data in response to generating the first encrypted data; or after generating the first encrypted data, deleting the first data in response to a deletion request containing the data identifier of the first data received from the terminal.

According to at least some embodiments, after generating the first encrypted data, the method further comprises: when a synchronization request containing a data identifier of the first data is acquired from the terminal, sending a second key acquisition request to the second server according to the synchronization request, the second key acquisition request being configured to request the second server for a first decryption key; decrypting the first encrypted data to generate the first data according to the first decryption key; and sending the first data to the terminal.

At least some embodiments of the present disclosure provide a server, comprising: a first acquisition module, configured to acquire a backup request containing first data to be backed up from a terminal, the backup request being configured to request the first server to back up the first data; a first sending module, configured to send a key acquisition request to a second server according to the backup request, the key acquisition request containing characteristic information of the first data; a second acquisition module, configured to acquire a first encryption key from the second server, the first encryption key being generated according to the characteristic information of the first data; and a first encryption module, configured to encrypt the first data to generate first encrypted data according to the first encryption key, and store the first encrypted data.

According to at least some embodiments, the first sending module comprises: an extraction unit, configured to extract user information and a data identifier of the first data from the backup request, and determine the user information and the data identifier as the characteristic information; and a sending unit, configured to send the key acquisition request containing the characteristic information to the second server.

According to at least some embodiments, the first acquisition module comprises: a first acquisition unit, configured to acquire the backup request sent by the terminal, the backup request containing second decrypted data and the second encrypted data being generated by encrypting the first data with a second encryption key; and a first decryption unit, configured to decrypt the second encrypted data with a second decryption key to obtain the first data, the second decryption key being configured to decrypt the first data encrypted with the second encryption key.

According to at least some embodiments, the first acquisition module (301) comprises: a first acquisition unit, configured to acquire the backup request sent by the terminal, the backup request containing second encrypted data and third encrypted data, the second encrypted data being generated by encrypting the first data with the second encryption key, the third encrypted data being generated by encrypting a second decryption key with a third encryption key and the second decryption key being configured to decrypt the first data encrypted with the second encryption key; a first decryption unit, configured to decrypt the third encrypted data with a third decryption key to obtain the second decryption key, the third decryption key being configured to decrypt the second decryption key encrypted with the third encryption key; and a second decryption unit, configured to decrypt the second encrypted data with the second decryption key to obtain the first data.

According to at least some embodiments, the first decryption unit is configured to acquire the third decryption key from the second server, and decrypt the third encrypted data with the third decryption key to obtain the second decryption key.

According to at least some embodiments, the first encryption module is further configured to: delete the first data in response to generating the first encrypted data; or after generating the first encrypted data, delete the first data in response to a deletion request containing the data identifier of the first data received from the terminal.

According to at least some embodiments, the first acquisition module further comprises a first decryption unit; when a synchronization request containing a data identifier of the first data is acquired from the terminal, the first sending module is configured to send a second key acquisition request to the second server according to the synchronization request, the second key acquisition request being configured to request the second server for a first decryption key, and send the first data to the terminal; and the first decryption unit is configured to decrypt the first encrypted data to generate the first data according to the first decryption key; and send the first data to the terminal.

At least some embodiments of the present disclosure provide a computer-readable storage medium, storing instructions, which, when executed by a processor, cause the processor to execute the data backup method as described above.

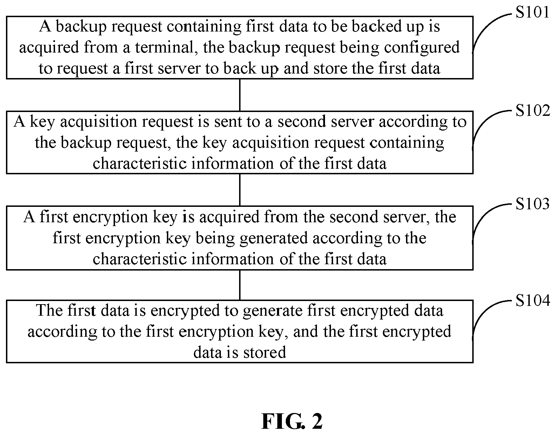

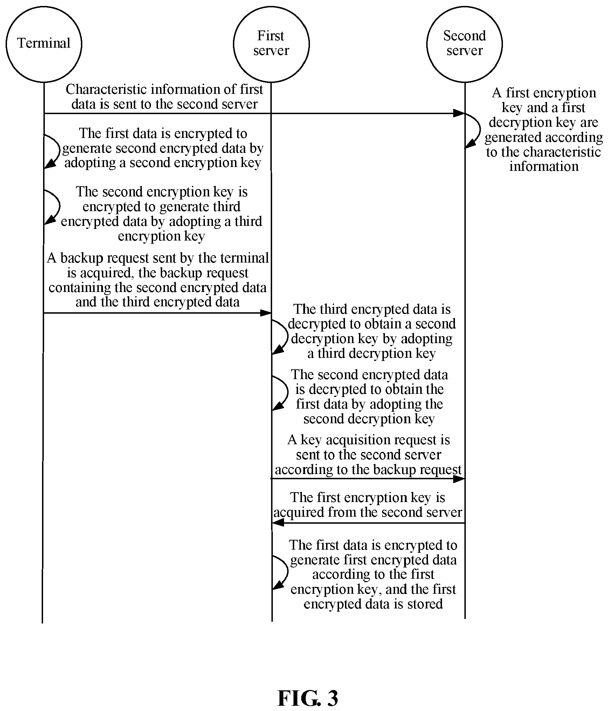

Simultaneously referring to Fig. 1, Fig. 2 and Fig. 3, Fig. 1 is a scenario diagram of a data synchronization and backup method according to an embodiment of the disclosure. Fig. 2 is a flowchart of a data backup method according to an embodiment of the disclosure. Fig. 3 is a data interaction diagram of a data synchronization and backup method according to an embodiment of the disclosure.

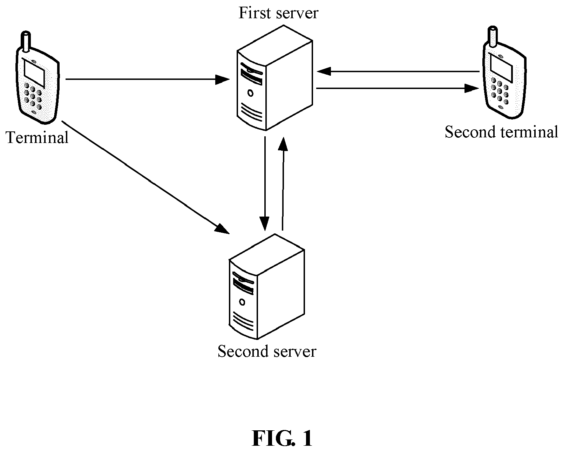

In the embodiment, the data backup method is mainly applied to a first server, and the data backup method includes the operations in blocks S101-S104 illustrated in FIG. 1.

In the block S101, a backup request containing first data to be backed up is acquired from a terminal, the backup request being configured to request the first server to back up the first data.

In the block S101, when detecting that there is new data after login with a cloud account, a first terminal sends a backup request to the first server. The backup request contains first data and characteristic information of the first data, wherein the characteristic information of the first data includes user information corresponding to the first terminal, a data identifier of the first data and the like. For example, when the cloud account is a cloud album account, the first data is a new photo, and the characteristic information includes the user information, a data identifier of the photo, a shooting date of the photo, a shooting place of the photo, a size of the photo and the like.

In the block S102, a key acquisition request is sent to a second server according to the backup request, the key acquisition request containing characteristic information of the first data.

Herein, after receiving the backup request, the first server extracts the characteristic information, loads the characteristic information into the key acquisition request, and then sends the key acquisition request to the second server.

In the block S103, a first encryption key is acquired from the second server, the first encryption key being generated according to the characteristic information of the first data.

Herein, when sending the backup request to the first server, the terminal may also send the characteristic information of the first data to the second server. Then, the second server generates the first encryption key and a corresponding first decryption key according to the characteristic information. When asymmetric encryption is adopted, the first encryption key is a public key, and the first decryption key is a private key. When symmetric encryption is adopted, the first encryption key and the first decryption key are the same key.

In the second server, a first encryption key and a first decryption key are generated for characteristic information of each piece of first data. That is, different data have different first encryption keys and first decryption keys. The first encryption key is mainly configured to encrypt the first data to generate first encrypted data for being stored in the first server. The first decryption key is configured to decrypt the first encrypted data to generate the first data for performing synchronization operations on the first data.

In the block S104, the first data is encrypted to generate first encrypted data according to the first encryption key, and the first encrypted data is stored.

Herein, the first server encrypts the first data to obtain the first encrypted data with the first encryption key after receiving the first encryption key. In the first server, a storage space is created for each user, and after the first data is encrypted to obtain the first encrypted data, the first encrypted data is stored in the storage space corresponding to the user. In the first server, after the first data is encrypted to generate the encrypted data, the first data is automatically deleted, that is, the first data is only stored in form of the first encrypted data obtained through the encryption operation.

From the above, according to the data backup method provided by the embodiment of the disclosure, the backup request containing the first data to be backed up is acquired from the terminal, the backup request being configured to request the first server to back up the first data; the encryption acquisition request is sent to the second server according to the backup request, the key acquisition request containing the characteristic information of the first data; the first encryption key is acquired from the second server, the first encryption key being generated according to the characteristic information of the first data; and the first data is encrypted to generate the first encrypted data according to the first encryption key, and the first encrypted data is stored, thereby completing backup of the data. Moreover, the data stored in one server is encrypted with the first encryption key acquired from the other server, so that a beneficial effect of improving data security is achieved.

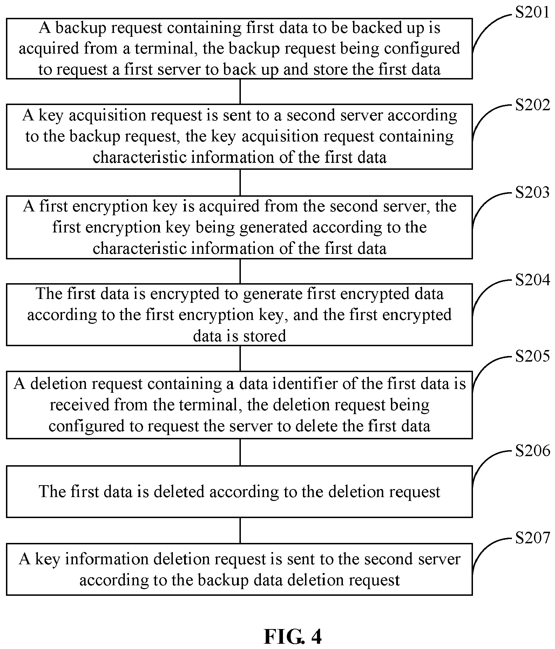

Fig. 4 is a flowchart of a data backup method according to a preferred embodiment of the disclosure. The data backup method includes the operations in blocks S201-S207 illustrated in FIG. 4.

In the block S201, a backup request containing first data to be backed up is acquired from a terminal, the backup request being configured to request a first server to back up the first data.

In the block S201, when detecting that there is new data after login with a cloud account, a first terminal sends a backup request to the server. The backup request contains first data and characteristic information of the first data, wherein the characteristic information of the first data includes user information corresponding to the first terminal, a data identifier of the first data and the like. For example, when the cloud account is a cloud album account, the first data is a new photo, and the characteristic information includes the user information, a data identifier of the photo, a shooting date of the photo, a shooting place of the photo, a size of the photo and the like.

In some embodiments, the block S201 includes the following operations.

In S2011, the backup request sent by the terminal is acquired, the backup request containing second encrypted data and third encrypted data, wherein the second encrypted data is generated by encrypting the first data with a second encryption key, the third encrypted data is generated by encrypting a second decryption key with a third encryption key, and the second decryption key is configured to decrypt the data encrypted with the second encryption key. The second encrypted data and the third encrypted data are both generated on a terminal side.

In S2012, the third encrypted data is decrypted with a third decryption key to obtain the second decryption key, the third decryption key being configured to decrypt the data encrypted with the third encryption key.

Herein, the first server may directly store the third decryption key, and may also store the third decryption key in a second server.

Therefore, in some embodiments, S2012 includes that: the third decryption key is acquired from the second server, and then the third encrypted data is decrypted with the third decryption key to obtain the second decryption key.

In S2013, the second encrypted data is decrypted to obtain the first data with the second decryption key, wherein the second decryption key and the second encryption key may be a pair of asymmetric keys, i.e. a private key and a public key respectively. Of course, the second decryption key and the second encryption key may also be symmetric keys.

In some other embodiments, the block S201 includes the following operations.

In S2014, the backup request sent by the terminal is acquired, the backup request containing the second encrypted data and the second encrypted data being generated by encrypting the first data with the second encryption key.

In S2015, the second encrypted data is decrypted with the second decryption key to obtain the first data, the second decryption key being configured to decrypt the data encrypted with the second encryption key. The second decryption key may be a key stored on a first server side, and may also be a key stored on a second server side.

In the block S202, a key acquisition request is sent to a second server according to the backup request, the key acquisition request containing characteristic information of the first data.

In the block, after receiving the backup request, the first server extracts the characteristic information, loads the characteristic information into the key acquisition request, and then sends the key acquisition request to the second server. In some embodiments, the block S202 includes the following operations.

In S2021, user information and a data identifier of the first data are extracted from the backup request, and the user information and the data identifier are determined as the characteristic information. The user information and the data identifier are loaded into the backup request by the terminal side.

In S2022, the key acquisition request containing the characteristic information is sent to the second server.

In the block S203, a first encryption key is acquired from the second server, the first encryption key being generated according to the characteristic information of the first data.

In the block S203, when sending the backup request to the first server, the terminal may also send the characteristic information of the first data to the second server. Then, the second server generates the first encryption key and a corresponding first decryption key according to the characteristic information. When asymmetric encryption is adopted, the first encryption key is a public key, and the first decryption key is a private key. When symmetric encryption is adopted, the first encryption key and the first decryption key are the same key.

In the block S204, the first data is encrypted to generate first encrypted data according to the first encryption key, and the first encrypted data is stored.

Herein, the first server encrypts the first data to obtain the first encrypted data with the first encryption key after receiving the first encryption key. In the first server, a storage space is created for each user, and after the first data is encrypted to obtain the first encrypted data, the first encrypted data is stored in the storage space corresponding to the user. When the first encrypted data is deleted by the first server, the first server may send an instruction to the second server for instructing the second server to correspondingly delete the first encrypted data and first decrypted data stored therein.

In the block S205, a deletion request containing the data identifier of the first data is received from the terminal, the deletion request being configured to request the first server to delete the first data.

In the block S205, the deletion request is configured to delete the first data which has been backed up. The deletion request contains the data identifier of the first data.

In the block S206, the first data is deleted according to the deletion request. The first server deletes the corresponding first data according to the extracted data identifier.

In the block S207, a key information deletion request is sent to the second server according to the deletion request for the backup data to enable the second server to delete the first encryption key and first decryption key corresponding to the backup data. After receiving the deletion request, the first server extracts the data identifier therein to delete the first encryption key and first decryption key corresponding to the data identifier. Therefore, storage spaces of the second server may be continuously cleaned.

From the above, according to the data backup method provided by the embodiment of the disclosure, the backup request containing the first data to be backed up is acquired from the terminal, the backup request being configured to request the first server to back up the first data; the encryption acquisition request is sent to the second server according to the backup request, the key acquisition request containing the characteristic information of the first data; the first encryption key is acquired from the second server, the first encryption key being generated according to the characteristic information of the first data; and the first data is encrypted to generate the first encrypted data according to the first encryption key, and the first encrypted data is stored, thereby completing backup of the data. Moreover, the data stored in one server is encrypted with the first encryption key acquired from the other server, so that a beneficial effect of improving data security is achieved.

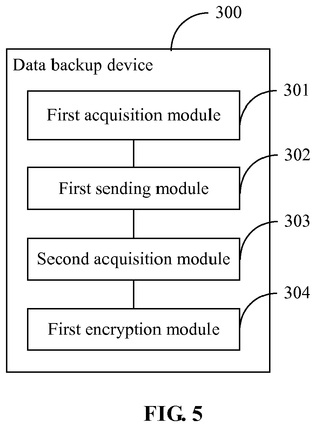

Referring to Fig. 5, Fig. 5 is a structure diagram of a data backup device according to a preferred embodiment of the disclosure. The data backup device includes: a first acquisition module 301, a first sending module 302, a second acquisition module 303 and a first encryption module 304. The first acquisition module 301 is configured to acquire a backup request containing first data to be backed up from a terminal, the backup request being configured to request the first server to back up the first data.

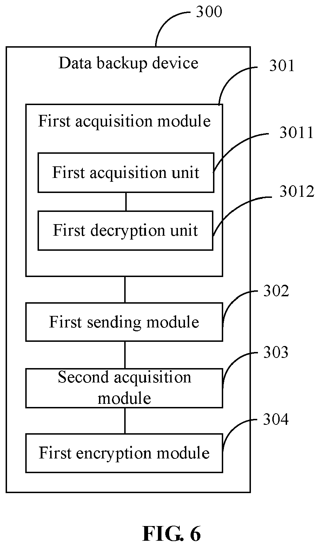

Simultaneously referring to Fig. 6, in some embodiments, the first acquisition module 301 includes: a first acquisition unit 3011 and a first decryption unit 3012. The first acquisition unit 3011 is configured to acquire the backup request sent by the terminal, the backup request containing second decrypted data and the second decrypted data being generated by encrypting the first data with a second encryption key. The first decryption unit 3012 is configured to decrypt the second encrypted data to obtain the first data with a second decryption key, the second decryption key being configured to decrypt the data encrypted with the second encryption key.

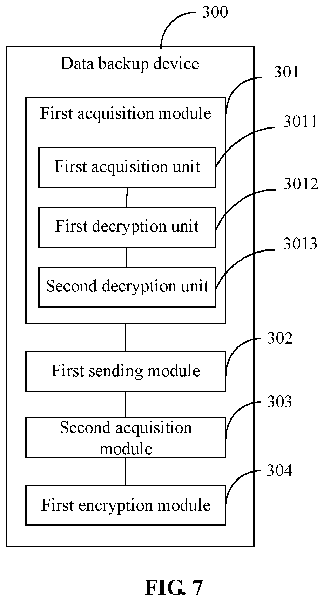

In some other embodiments, simultaneously referring to Fig. 7, the first acquisition module 301 includes: the first acquisition unit 3011, the first decryption unit 3012 and a second decryption unit 3013.

The first acquisition unit 3011 is configured to acquire the backup request sent by the terminal, the backup request containing the second encrypted data and third encrypted data, the second encrypted data being generated by encrypting the first data with the second encryption key, the third encrypted data being generated by encrypting the second decryption key with a third encryption key and the second decryption key being configured to decrypt the data encrypted with the second encryption key.

The first decryption unit 3012 is configured to decrypt the third encrypted data to obtain the second decryption key with a third decryption key, the third decryption key being configured to decrypt the data encrypted with the third encryption key. The first decryption unit is configured to acquire the third decryption key from the server and decrypt the third encrypted data to obtain the second decryption key with the third decryption key.

The second decryption unit 3013 is configured to decrypt the second encrypted data to obtain the first data with the second decryption key.

The first sending module 302 is configured to send a key acquisition request to a second server according to the backup request, the key acquisition request containing characteristic information of the first data.

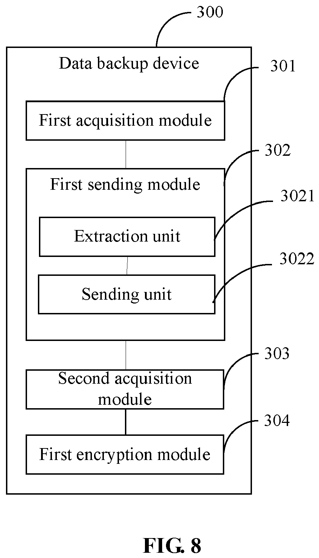

Simultaneously referring to Fig. 8, in some embodiments, the first sending module 302 includes: an extraction unit 3021 and a sending unit 3022.

The extraction unit 3021 is configured to extract user information and a data identifier of the first data from the backup request, and determine the user information and the data identifier as the characteristic information. The sending unit 3022 is configured to send a key acquisition request containing the characteristic information to the second server.

The second acquisition module 303 is configured to acquire a first encryption key from the second server, the first encryption key being generated according to the characteristic information of the first data.

The first encryption module 304 is configured to encrypt the first data to generate first encrypted data according to the first encryption key, and store the first encrypted data.

The disclosure further provides a storage medium, which stores multiple instructions and is applied to a server, the instructions being loaded by a processor and executing the method in the abovementioned embodiment. For example, the following operations are executed: a backup request containing first data to be backed up is acquired from a terminal, the backup request being configured to request a first server to back up the first data; a key acquisition request is sent to a second server according to the backup request, the key acquisition request containing characteristic information of the first data; a first encryption key is acquired from the second server, the first encryption key being generated according to the characteristic information of the first data; and the first data is encrypted to generate first encrypted data according to the first encryption key, and the first encrypted data is stored.

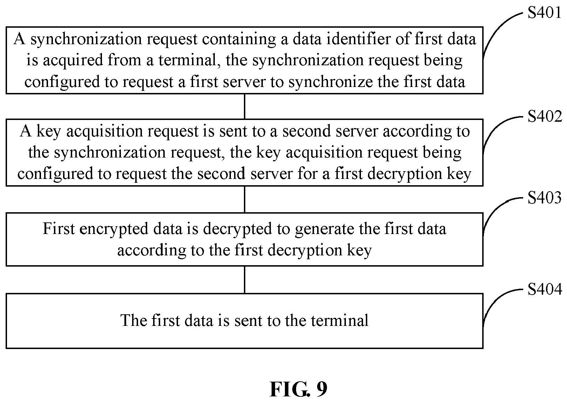

Referring to Fig. 9, Fig. 9 is a flowchart of a data synchronization method according to a preferred embodiment of the disclosure. The data synchronization method is applied to a first server, and includes the operations in blocks S401-S404 illustrated in FIG. 9.

In the block S401, a synchronization request containing a data identifier of first data is acquired from a terminal, the synchronization request being configured to request a first server to synchronize the first data.

In the block S401, the synchronization request sent by the terminal contains characteristic information of the first data to be synchronized. The characteristic information includes user information, a user identifier of the data to be synchronized and the like. The user information includes a cloud account, a password and the like. For example, when the cloud account is a cloud album account, the first data is a new photo, and the characteristic information includes the user information, a data identifier of the photo, a shooting date of the photo, a shooting place of the photo, a size of the photo and the like.

In the block S402, a key acquisition request is sent to a second server according to the synchronization request, the key acquisition request being configured to request the second server for a first decryption key.

In the block S402, the key acquisition request contains characteristic information of the data to be synchronized, i.e. user information, a data identifier of the data to be synchronized and the like. After acquiring the key acquisition request, the second server parses the user information and data identifier of the first data therein. The second server performs authentication processing according to the user information, and after successful authentication, calls the corresponding first decryption key according to the data identifier of the first data and the user information, and returns the first decryption key to the first server. In case of failed authentication, i.e. the user information is wrong or the user is an unregistered user, the second server sends authentication failure information to the first server.

In the block S403, first encrypted data is decrypted to generate the first data according to the first decryption key.

In the block S403, after receiving the first decryption key, the first server decrypts the first encrypted data according to the first decryption key, thereby obtaining the first data to be synchronized.

In the block S404, the first data is sent to the terminal.

In the block S404, the first data is deleted from the first server at the same time when the first data is sent to the terminal, such that there is no first data in a decrypted state but only the first encrypted data in an encrypted state on the first server, thereby avoid any influence on data security once the first data which is not encrypted is leaked in case of information leakage of the first server.

An embodiment of the disclosure further relates to a server, which may be a server located on a network, and may also be computer equipment such as a Personal Computer (PC).

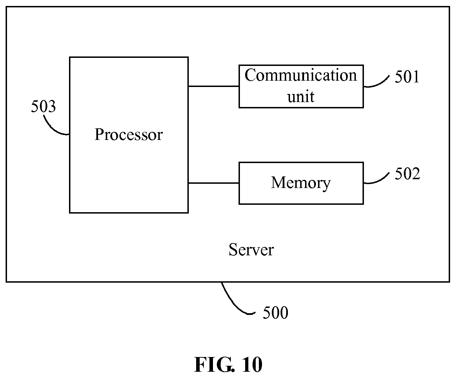

As illustrated in Fig. 10, the server 500 includes: a communication unit 501, a memory 502 including one or more computer-readable storage media and a processor 503 including one or more processing cores.

Herein, the communication unit 501 may communicate with network equipment or other electronic equipment through a network to implement information sending and receiving between the server and the network equipment or the other electronic equipment. For example, the communication unit 501 may communicate with another server or electronic equipment such as an intelligent mobile phone and a tablet computer through the network.

The memory 502 may be configured to store application programs and data. The application programs stored in the memory 502 may include executable program codes. The application programs may form various function modules. The processor 503 runs the application programs stored in the memory 502 for executing various function applications and data processing. The memory 502 may mainly include a program storage area and a data storage area, wherein the program storage area may store an operating system, an application program required by at least one function and the like, and the data storage area may store data created by the server 500 or exchanged with the other electronic equipment.

The processor 503 is a control center of the server 500, connects each part of the server 500 by virtue of various interfaces and lines, and runs or executes the application programs stored in the memory 502 and calls the data stored in the memory 502 to execute various functions and data processing of the server 500, thereby monitoring the whole server 500.

In the embodiment, the processor 503 in the server 500 may load the executable program codes corresponding to a process of one or more application programs into the memory 502 according to the following instructions, and the processor 503 runs the application programs stored in the memory 502, thereby realizing various functions: a backup request containing first data to be backed up is acquired from a terminal, the backup request being configured to request a first server to back up the first data; a key acquisition request is sent to a second server according to the backup request, the key acquisition request containing characteristic information of the first data; a first encryption key is acquired from the second server, the first encryption key being generated according to the characteristic information of the first data; and the first data is encrypted to generate first encrypted data according to the first encryption key, and the first encrypted data is stored.

The disclosure provides various operations of the embodiments. In an embodiment, one or more operations may form computer-readable instructions stored on one or more computer-readable media, which are executed by electronic equipment to cause computing equipment to execute the operations. The sequence in which some or all the operations are described should not be explained to imply that these operations are required to be sequential. Those skilled in the art should understand that there is another sequence with benefits of the specification to replace it. Moreover, it should be understood that not all operations are required to exist in each embodiment provided by the disclosure.

Moreover, the term "preferred" used in the disclosure refers to use as a case, an example or an instance. Any aspect or design described to be preferred in the disclosure may not be explained to be more beneficial than the other aspects or designs. On the contrary, the term "preferred" is used to provide a concept in a specific manner. The term "or" used in the application is intended to refer to inclusive "or" or nonexclusive "or". That is, "X uses A or B" refers natural inclusion of any one which is arranged, unless otherwise specified or clearly noted in the context. That is, if X uses A, X uses B or X uses both A and B, "X uses A or B" is met in any abovementioned example.

Moreover, although the disclosure has been illustrated and described with respect to one or more implementation modes, equivalent transformations and modifications made on the basis of reading and understanding to the specification and the drawings will be apparent to those skilled in the art. The disclosure includes all these modifications and transformations, and is only limited by the scope of the appended claims. Particularly for various functions executed by the abovementioned components (such as elements and resources), terms adopted to describe such components are intended to correspond to any component (unless otherwise indicated) executing the specified functions (for example, they are functionally equivalent) of the components, although they are structurally inequivalent to specified structures of the functions in the exemplary implementation modes of the disclosure in the disclosure. In addition, although a specific characteristic of the disclosure has been disclosed with respect to only one of a plurality of implementation modes, this characteristic may be combined with one or more other characteristics of the other implementation modes which may be, for example, expected and beneficial for a given or specific application. Moreover, for use of terms "include", "have", "contain" or their transformations for specific implementation modes or claims, such terms refer to inclusion in a manner similar to term "involve".

Each function unit in the embodiments of the disclosure may be integrated into a processing module, each unit may also exist independently, and two or more than two units may also be integrated into a module. The abovementioned integrated module may be implemented in form of hardware, and may also be implemented in form of a software function module. When being implemented in form of software function module and sold or used as an independent product, the integrated module may also be stored in a computer-readable storage medium. The abovementioned storage medium may be a read-only memory, a magnetic disk, an optical disk or the like. Each device or system may execute the method in the corresponding method embodiment.

From the above, although the disclosure has been disclosed above with preferred embodiments, the preferred embodiments are not intended to limit the disclosure. Those skilled in the art may make various modifications and embellishments without departing from the spirit and scope of the disclosure. Therefore, the scope of protection of the disclosure is subject to the scope defined by the claims.

## Claims

1. A data backup method, applied to a first server and comprising:
acquiring (S101, S201) a backup request containing first data to be backed up from a terminal, the backup request being configured to request the first server to back up the first data;
sending (S102, S202) a key acquisition request to a second server according to the backup request, the key acquisition request containing characteristic information of the first data;
acquiring (S103, S203) a first encryption key from the second server, the first encryption key being generated according to the characteristic information of the first data; and
encrypting (S104, S204) the first data to generate first encrypted data according to the first encryption key, and storing the first encrypted data.

2. The data backup method according to claim 1, wherein sending (S102, S202) the key acquisition request to the second server according to the backup request comprises:
extracting user information and a data identifier of the first data from the backup request, and determining the user information and the data identifier as the characteristic information; and
sending the key acquisition request containing the characteristic information to the second server.

3. The data backup method according to claim 1 or 2, wherein the backup request includes second decrypted data and the second encrypted data is generated by encrypting the first data with a second encryption key; and
wherein after acquiring (S101, S201) the backup request sent by the terminal, the method further comprises:
decrypting the second encrypted data with a second decryption key to obtain the first data, the second decryption key being configured to decrypt the first data encrypted with the second encryption key.

4. The data backup method according to claim 1 or 2, wherein the backup request includes second encrypted data and third encrypted data, the second encrypted data being generated by encrypting the first data with the second encryption key, the third encrypted data being generated by encrypting a second decryption key with a third encryption key and the second decryption key being configured to decrypt the first data encrypted with the second encryption key;
wherein after acquiring (S101, S201) the backup request sent by the terminal, the method further comprises:
decrypting the third encrypted data with a third decryption key to obtain the second decryption key, the third decryption key being configured to decrypt the second decryption key encrypted with the third encryption key; and
decrypting the second encrypted data with the second decryption key to obtain the first data.

5. The data backup method according to claim 4, wherein decrypting the third encrypted data to obtain the second decryption key with the third decryption key comprises:
acquiring the third decryption key from the second server; and
decrypting the third encrypted data with the third decryption key to obtain the second decryption key.

6. The data backup method according to any one of claims 1 to 5, wherein the method further comprises:
deleting the first data in response to generating the first encrypted data; or
after generating the first encrypted data, deleting (S206) the first data in response to a deletion request containing the data identifier of the first data received from the terminal.

7. The data backup method according to claim 1, wherein after generating the first encrypted data, the method further comprises:
when a synchronization request containing a data identifier of the first data is acquired (S401) from the terminal, sending (S402) a second key acquisition request to the second server according to the synchronization request, the second key acquisition request being configured to request the second server for a first decryption key;
decrypting (S403) the first encrypted data to generate the first data according to the first decryption key; and
sending (S404) the first data to the terminal.

8. A server, comprising:
a first acquisition module (301), configured to acquire a backup request containing first data to be backed up from a terminal, the backup request being configured to request the first server to back up the first data;
a first sending module (302), configured to send a key acquisition request to a second server according to the backup request, the key acquisition request containing characteristic information of the first data;
a second acquisition module (303), configured to acquire a first encryption key from the second server, the first encryption key being generated according to the characteristic information of the first data; and
a first encryption module (304), configured to encrypt the first data to generate first encrypted data according to the first encryption key, and store the first encrypted data.

9. The server according to claim 8, wherein the first sending module (302) comprises:
an extraction unit (3021), configured to extract user information and a data identifier of the first data from the backup request, and determine the user information and the data identifier as the characteristic information; and
a sending unit (3022), configured to send the key acquisition request containing the characteristic information to the second server.

10. The server according to claim 8 or 9, wherein the first acquisition module (301) comprises:
a first acquisition unit (3011), configured to acquire the backup request sent by the terminal, the backup request containing second decrypted data and the second encrypted data being generated by encrypting the first data with a second encryption key; and
a first decryption unit (3012), configured to decrypt the second encrypted data with a second decryption key to obtain the first data, the second decryption key being configured to decrypt the first data encrypted with the second encryption key.

11. The server according to claim 8 or 9, wherein the first acquisition module (301) comprises:
a first acquisition unit (3011), configured to acquire the backup request sent by the terminal, the backup request containing second encrypted data and third encrypted data, the second encrypted data being generated by encrypting the first data with the second encryption key, the third encrypted data being generated by encrypting a second decryption key with a third encryption key and the second decryption key being configured to decrypt the first data encrypted with the second encryption key;
a first decryption unit (3012), configured to decrypt the third encrypted data with a third decryption key to obtain the second decryption key, the third decryption key being configured to decrypt the second decryption key encrypted with the third encryption key; and
a second decryption unit (3013), configured to decrypt the second encrypted data with the second decryption key to obtain the first data.

12. The server according to claim 11, wherein the first decryption unit (3012) is configured to:
acquire the third decryption key from the second server; and
decrypt the third encrypted data with the third decryption key to obtain the second decryption key.

13. The server according to claim 8, wherein the first encryption module (304) is further configured to:
delete the first data in response to generating the first encrypted data; or
after generating the first encrypted data, delete the first data in response to a deletion request containing the data identifier of the first data received from the terminal.

14. The server according to claim 8 or 9, wherein the first acquisition module (301) further comprises a first decryption unit (3012);
when a synchronization request containing a data identifier of the first data is acquired from the terminal, the first sending module (302) is configured to send a second key acquisition request to the second server according to the synchronization request, the second key acquisition request being configured to request the second server for a first decryption key, and send the first data to the terminal; and
the first decryption unit (3012) is configured to decrypt the first encrypted data to generate the first data according to the first decryption key.

15. A computer readable storage medium, storing instructions, which, when executed by a processor, cause the processor to execute the method according to any one of claims 1 to 7.
